# EUROPÄISCHE PATENTSCHRIFT

(11) **EP 2 040 230 B1**
(45) Veröffentlichungstag und Bekanntmachung des Hinweises auf die Patenterteilung: **08.05.2019**
(21) Anmeldenummer: 08164621.8
(22) Anmeldetag: 18.09.2008
(51) Int. Cl.: G07F 11/32, B65G 1/137, G07F 17/00, G07F 11/16, B65G 47/90

(54) **Automatisches Warenlager**
Automatic goods dispenser
Entrepôt automatique

(30) Priorität: 19.09.2007 DE 202007013104 U
(43) Veröffentlichungstag der Anmeldung: 25.03.2009
(73) Patentinhaber: Gebr. Willach GmbH, 53809 Ruppichteroth (DE)
(72) Erfinder: Müller, Hans-Friedrich, 53809 Ruppichteroth (DE); Willach, Ulrich, 53819 Neunkirchen-Seelscheid (DE)
(74) Vertreter: dompatent von Kreisler Selting Werner - Partnerschaft von Patent- und Rechtsanwälten mbB

(56) Entgegenhaltungen:
- EP-A2- 1 407 984
- US-A1- 2006 107 623
- US-A1- 2006 161 293
- US-A1- 2007 043 469

## Beschreibung

Die Erfindung betrifft ein automatisches Warenlager mit einer Vorrichtung, die einzulagernde Gegenstände identifiziert, und einem Lagerautomaten mit Manipulatorfunktionen für Einlagerung und Auslagerung.

Automatische Warenlager sind im Stande, Waren automatisch einzulagern und automatisch auszulagern, wobei ein Lagerverwaltungsrechner den Lagerplatz bestimmt und den Aufenthaltsort der Ware bis zu deren Auslagerung speichert bzw. verfolgt. Ein Lagerautomat vom Kanaltyp ist beschrieben in EP 0 991 037 B1 (Willach). Kanaltyp bedeutet, dass gleiche Gegenstände in einer Reihe angeordnet sind und beim Herausnehmen eines Gegenstandes aus dem Kanal nachrutschen. Solche Lagerautomaten eignen sich besonders für Schnelldreher.

Ein Lagerautomat vom Einzelplatztyp ist beschrieben in EP 1 407 984 B1 (Willach). Bei diesem Automaten bedient ein einziger Manipulator das Regallager, das die Waren an definierten Einzelplätzen speichert. Der Manipulator bewirkt sowohl die Einlagerung als auch die Auslagerung der Waren.

In EP 1 409 376 B1 (Beils et al.) ist ein gemischtes Lager aus Regalmodulen für Langsamdreher und Regalmodulen für Schnelldreher beschrieben. Das Warenlager weist ein Einlagerungsmodul und ein Identifizierungsmodul auf. Ein Manipulator bedient beide Regaltypen, wobei der eine Regaltyp ein Kanallager mit eigenen Auslagerungsmanipulatoren ist.

Bei Medikamentenpackungen bestehen Regelungen, die vorschreiben, dass auf der Packung der Name des Patienten sowie bestimmte Angaben über das Arzneimittel stehen, beispielsweise eine individuelle Einnahmevorschrift. Solche Informationen können mit einem Etikett an der Packung angebracht werden. Bekannt sind Etikettiermaschinen, die ein individuell bedrucktes Etikett liefern können. Solche Etiketten müssen manuell an den Packungen angebracht werden. Dies birgt die Gefahr von Verwechslungen.

Der Oberbegriff des Patentanspruchs 1 geht aus von einem automatischen Warenlager nach US 2006/0107623 A1. Dieses Warenlager weist einen Lagerautomaten auf, welcher mit einem Manipulator zum Auslagern gewünschter Gegenstände ausgestattet ist. Der Manipulator weist einen an einem Roboterarm angeordneten Greifer auf. Der Roboterarm bewegt einen auszulagernden Behälter in einen Produktetikettierbereich des Lagerautomaten. US 2007/0043469 A1 offenbart ein weiteres automatisches Warenlager.

Der Erfindung liegt die Aufgabe zugrunde, ein automatisches Warenlager anzugeben, das mit einer Zusatzfunktion ausgestattet werden kann, wobei Verwechslungen der Waren oder Packungen so gut wie ausgeschlossen sind.

Das automatische Warenlager nach der vorliegenden Erfindung ist durch den Anspruch 1 bezeichnet. Es sieht vor, dass die Manipulatorfunktion für Auslagerung das Festhalten des Gegenstandes im Wirkbereich einer Behandlungsvorrichtung umfasst.

Bei dem erfindungsgemäßen Warenlager hat der Auslagerungsmanipulator, der die Gegenstände aus dem Warenlager ausgibt, nicht nur die Funktion der Warenausgabe sondern auch eine Haltefunktion im Zusammenwirken mit einer Behandlungsvorrichtung. Die Behandlungsvorrichtung dient dazu, an dem auszugebenden Gegenstand eine Bearbeitung vorzunehmen, beispielsweise das Aufkleben eines Etiketts oder das Bedrucken. Dadurch, dass die Behandlung unmittelbar bei der Ausgabe des Gegenstandes aus dem Warenlager erfolgt, sind Verwechslungen praktisch ausgeschlossen. Dies liegt daran, dass im Warenlager keine manuellen Eingriffe erfolgen und sämtliche Bewegungen vom Lagerverwaltungsrechner gesteuert sind. Daher kann jeder Position, an der sich ein Gegenstand befinden kann, die Identität des jeweiligen Gegenstandes zugeordnet werden. Anders ausgedrückt: Dem Lagerverwaltungsrechner ist jederzeit bekannt, welcher Gegenstand sich in dem Warenlager an welcher Position befindet. Dadurch wird sichergestellt, dass bei der Ausgabe eines Gegenstandes die für diesen Gegenstand vorgesehene Behandlung an dem richtigen Gegenstand verübt wird.

Die Behandlungsvorrichtung ist eine Etikettiermaschine oder ein Drucker. Sie ist im Stande, warenbezogene Informationen an dem ausgelagerten Gegenstand anzubringen. Solche warenbezogenen Informationen sind beispielsweise Dosiervorschriften, Warnhinweise, der Name des Kunden und ähnliches.

Das erfindungsgemäße automatische Warenlager eignet sich insbesondere als Apothekenlager. In Apotheken sind die Waren in quaderförmigen Packungen enthalten und es gibt eine große Vielzahl unterschiedlicher Waren. Ein automatisches Apothekenlager bietet den Vorteil, dass der Pharmazeut sich vollständig dem Kunden widmen kann und nicht zum Holen der Ware in einem Lagerraum verschwinden muss. Durch ein Transportsystem wird die Ware direkt an den Verkaufsplatz befördert, wo sie bereits mit der erforderlichen individuellen Bedruckung versehen ist.

Der Auslagerungsmanipulator des Lagerautomaten ist mit einer Stützvorrichtung zum Abstützen des entnommenen Gegenstandes während des Andrückens eines Etiketts versehen.

Um sicherzustellen, dass die Behandlung des Gegenstandes an der richtigen Stelle auf dem Gegenstand erfolgt, beispielsweise das Aufkleben eines Etiketts, wird eine Zentrierung des Gegenstandes vorgenommen. Zu diesem Zweck ist ein Warenträger des Manipulators mit seitlich bewegbaren Führungsbacken versehen, welche Gegenstände unterschiedlicher Abmessungen auf dem Warenträger zentrieren und in definierter Ausrichtung positionieren. Die Führungsbacken sind gegensinnig zueinander angetrieben. Vorzugsweise enthält mindestens eine der Führungsbacken einen Sensor, der anspricht, wenn das Zusammenbewegen der Führungsbacken eine vorbestimmte Kraft übersteigt, und die Führungsbacken in dieser Position anhält. Der Gegenstand wird auf diese Weise in seiner zentrierten Lage festgehalten, so dass die Behandlungsvorrichtung auf ihn einwirken kann.

Erfindungsgemäß sind die Führungsbacken jeweils mit einer Einlaufschräge versehen. In einer ersten Phase des Positionierens eines Gegenstandes sind die Führungsbacken derart gesteuert, dass sie sich voneinander entfernen. Dadurch wird der Gegenstand, sobald er zwischen die Führungsbacken passt, gegen einen Anschlag bewegt, ohne dass der Gegenstand Gelegenheit hätte, sich auf dem Warenträger in eine andere Position zu drehen. Die konvergierenden Einlaufschrägen der Führungsbacken bilden einen sich zeitlich erweiternden Trichter, in dem der Gegenstand, wenn er in den Trichterhals passt, geordnet absinken kann. Anschließend erfolgt ein Zusammenbewegen der Führungsbacken, wobei infolge der gegensinnig synchron angetriebenen Führungsbacken der Gegenstand auf dem Warenträger zentriert wird.

Die Behandlungsvorrichtung enthält einen Applikator, vorzugsweise mit einer Stempelplatte und einem die Stempelplatte tragenden Schwenkarm.

Die Behandlungsvorrichtung ist zweckmäßigerweise vor der Vorderseite des Lagerautomaten fixiert und der Manipulator des Lagerautomaten kann eine gespeicherte Behandlungsposition anfahren, in der die Behandlungsvorrichtung an den auf dem Manipulator liegenden Gegenstand zugreifen kann.

Die Identifizierung der Gegenstände erfolgt vorzugsweise bei deren Einlagerung durch einen entsprechenden Sensor, beispielsweise einen Barcodeleser. Der Sensor kann in einem Warenannahmeautomaten, wie er in EP 07 114 704.5 (Willach) beschrieben ist, integriert sein oder Teil einer manuell zu bedienenden Vorrichtung zur Identifizierung von einzulagernden Gegenständen. Während im ersten Fall die Überführung des identifizierten Gegenstandes vom Warenannahmeautomaten zum Lagerautomaten automatisch erfolgt, legt im zweiten Fall der Bediener den identifizierten Gegenstand an einer Übergabestelle ab, von der aus die Einlagerung automatisch erfolgt. Nach Erkennung des Gegenstandes wählt der Lagerverwaltungsrechner einen geeigneten Lagerplatz oder Kanal für diesen Gegenstand aus. Durch einen Manipulator wird der Gegenstand an diesen Lagerplatz verbracht. Die Einlagerung kann auch manuell erfolgen, wenn der Lagerplatz vom Lagerverwaltungsrechner durch beispielsweise eine optische Anzeige vorgegeben wird.

Es besteht auch die Möglichkeit, dass die Behandlungsvorrichtung ein Drucker ist. In diesem Fall wird ein an dem Gegenstand vorgesehenes Feld mit einer Bedruckung versehen, beispielsweise durch einen Tintenstrahldrucker. Mit dem Etikett oder der Bedruckung kann auch der Name der Apotheke aufgebracht werden.

Im Folgenden werden unter Bezugnahme auf die Zeichnungen Ausführungsbeispiele der Erfindung näher erläutert.

Es zeigen:
- Figur 1: ein erstes Ausführungsbeispiel eines automatischen Warenlagers nach der Erfindung,
- Figur 2: bei einem zweiten Ausführungsbeispiel eine Frontansicht des Lagerautomaten, jedoch ohne vorgesetzte Behandlungsvorrichtung,
- Figur 3: die vor dem Lagerautomaten befestigte oder fixierte Behandlungsvorrichtung,
- Figur 4: die Schwenkbarkeit der Behandlungsvorrichtung relativ zu dem Lagerautomaten zum Zwecke der Wartung und des Austausches von Etikettenrollen,
- Figur 5: den Warenträger des Manipulators in der Behandlungsposition mit dem davor angeordneten Applikator der Behandlungsvorrichtung,
- Figur 6: den Applikator der Behandlungsvorrichtung beim Übertragen eines Etiketts auf einen von dem Warenträger gehaltenen Gegenstand,
- Figur 7: das Zurückfahren des Applikators nach dem Übertragen des Etiketts auf den Gegenstand,
- Figur 8: den Warenträger des Manipulators mit den seitlich bewegbaren Führungsbacken,
- Figur 9: eine Schemazeichnung der zweiten Phase des Positionierens eines Gegenstandes durch Gegeneinanderbewegung der Führungsbacken und

Figur 10 das Ansprechen des Sensors, wenn der Druck der Führungsbacken einen vorbestimmten Wert übersteigt.

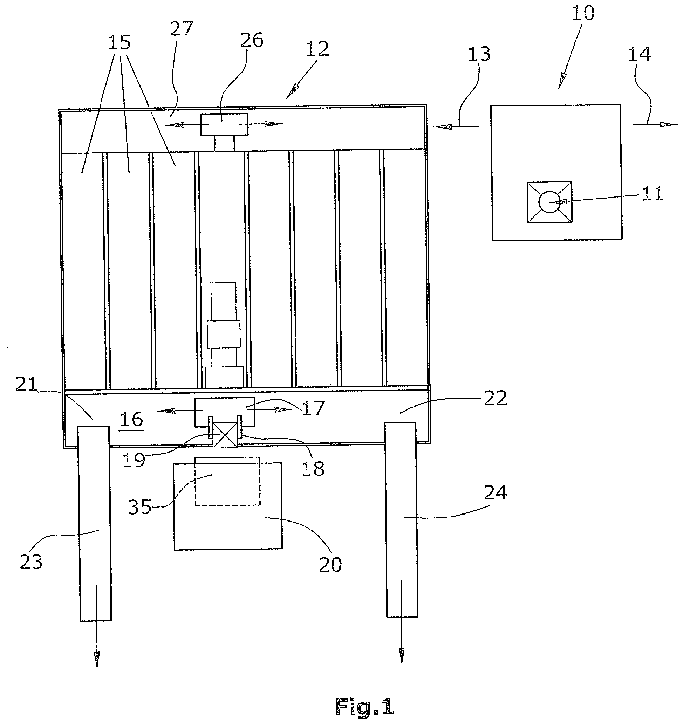

Das Warenlager des in Figur 1 dargestellten ersten Ausführungsbeispiels weist einen Warenannahmeautomaten 10 auf, in den Waren eingegeben werden, wie durch den Pfeil 11 angedeutet ist. Die Eingabe der Waren erfolgt regellos. Dies bedeutet, dass die Waren ungeordnet beispielsweise in einen Trichter eingefüllt und dann vereinzelt werden. Der Warenannahmeautomat enthält einen Sensor zur Identifizierung der einzelnen Waren anhand eines Barcodes, Data-Matrix-Codes oder eines an den Waren angebrachten Transponders. Ein Lagerverwaltungsrechner entscheidet daraufhin, ob jede einzelne Waren einem Lagerautomaten 12 zugeführt wird (Pfeil 13) oder einem anderen Lagerautomaten (Pfeil 14).

Der Lagerautomat 12 ist im vorliegenden Fall ein Kanalautomat mit mehreren Kanälen 15, in denen die Waren jeweils in einer Reihe übereinanderliegend gestapelt werden. Beispielsweise sind die Kanäle 15 auf Schrägfachböden oder in vertikalen Röhren ausgebildet, wobei jeweils der unterste Gegenstand entnommen werden kann und die anderen Gegenstände dann nach unten nachrutschen.

Der Lagerautomat 12 entspricht in seinem Aufbau im Wesentlichen demjenigen von EP 0 991 037 B1 (Willach). Am Ausgabeende der Kanalstruktur befindet sich ein Freiraum 16, in dem ein Manipulator 17 gesteuert bewegbar ist. Der Manipulator 17 hat einen Warenträger 18, welcher an das Ausgabeende eines Kanals 15 bewegt werden kann, um dort einen auszugebenden Gegenstand aus dem betreffenden Kanal 15 zu übernehmen. Der Manipulator 17 ist ein Auslagerungsmanipulator. Der Warenträger 18 ist eine Tragfläche mit rückwärtiger Stützfunktion. Der Manipulator 17 bringt den Gegenstand 19 an eine Behandlungsposition, an der sich eine Behandlungsvorrichtung 20 befindet. Die Behandlungsvorrichtung 20 ist hier eine

Etikettiermaschine, die ein individuell bedrucktes Etikett auf dem Gegenstand 19 anbringt. Hierzu wird der Gegenstand 19 von dem Manipulator 17 beispielsweise gegen die Etikettiermaschine 35 gedrückt. Im Anschluss an diese Behandlung bringt der Manipulator 17 den Gegenstand 19 an eine Ausgabeposition 21 oder 22. Von jeder Ausgabeposition führt ein Förderer 23 bzw. 24 zu einem bestimmten Arbeitsplatz, an dem der Auftrag zur Auslieferung der betreffenden Ware in das Computersystem eingegeben worden war.

Der Lagerautomat 12 weist einen Einlagerungsmanipulator 26 auf, der in einem Freiraum 27 an der Beschickungsseite der Kanäle 15 gesteuert verfahrbar ist, um Waren in die Kanäle 15 einzulagern. Der Einlagerungsmanipulator 26 holt die Waren von einer Übergabestation vom Warenannahmeautomaten 10 ab. Daher ist der gesamte Warenfluss des automatischen Warenlagers von der Warenannahme bis zur Warenausgabe unter Steuerung und Kontrolle des Lagerverwaltungsrechners, so dass Verwechslungen bzw. Vertauschungen von Waren praktisch nicht vorkommen können.

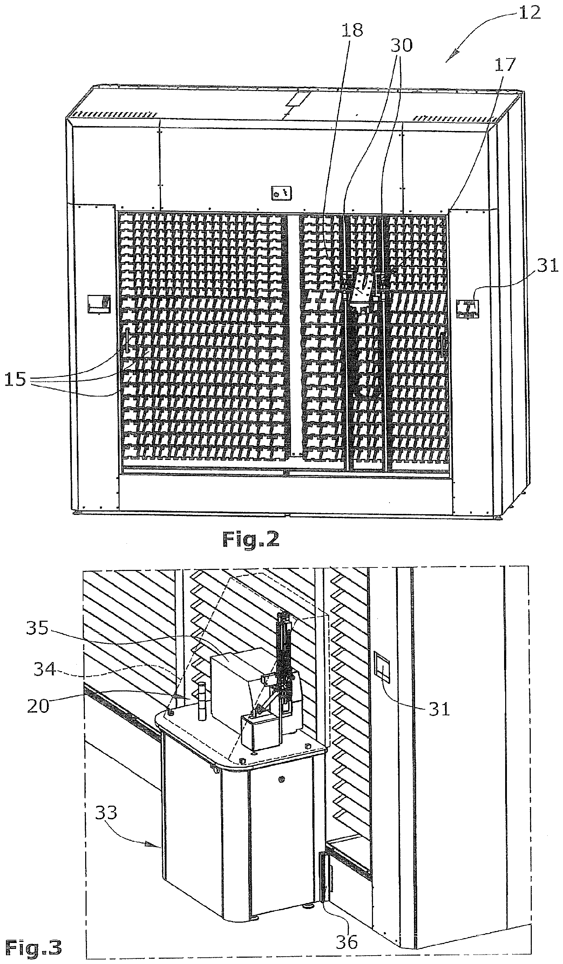

Bei dem zweiten Ausführungsbeispiel, das in den Figuren 2-10 dargestellt ist, ist ebenfalls ein Lagerautomat 12 vorhanden. In Figur 2 ist die Frontansicht dargestellt. Ein Warenannahmeautomat ist hierbei nicht vorgesehen. Die Gegenstände werden von der Rückseite her eingelagert. Der Lagerautomat enthält zahlreiche Kanäle 15. Nebeneinander angeordnete Kanäle 15 sind jeweils durch ein längslaufendes hochkant stehendes Blech voneinander getrennt. Die Kanäle 15 haben zum vorderen Ende hin Gefälle. Am vorderen Ende eines jeden Kanals befindet sich ein Anschlagelement.

Vor den Abgabeenden der Kanäle 15 ist der Manipulator 17 bewegbar. Die Bewegung erfolgt unter Steuerung durch einen Lagerverwaltungsrechner. Der Manipulator 17 weist einen Warenträger 18 auf, der an vertikalen Schienen 30 gesteuert verfahrbar ist. Der Warenträger hat eine schräge Tragfläche, auf die der unterste Gegenstand eines Kanals 15 hinabgleiten kann. Der Warenträger 18 des Manipulators fährt dann hinter ein Ausgabefenster 31, um den Gegenstand nach außen abzugeben. Dies ist der übliche Funktionsablauf des dem Stand der Technik entsprechenden Lagerautomaten von Figur 2.

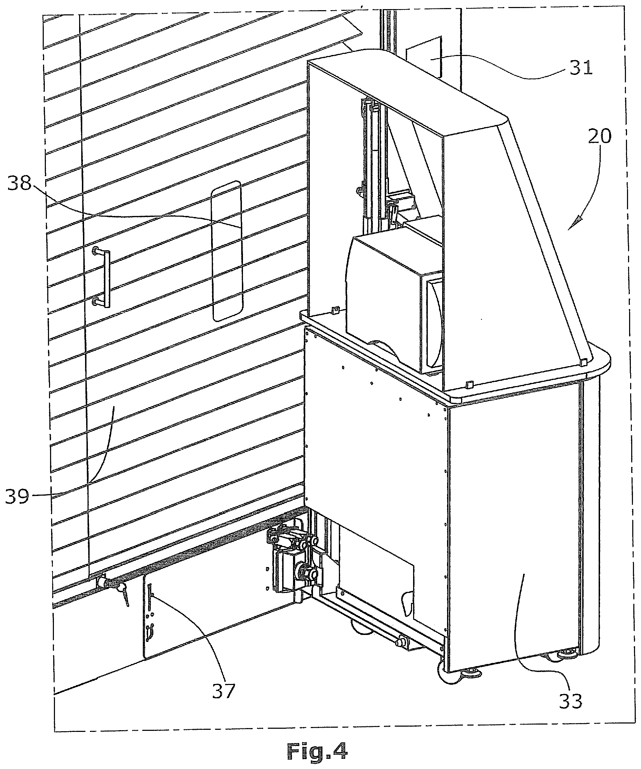

Erfindungsgemäß ist der Vorderseite des Lagerautomaten 12 eine Behandlungsvorrichtung 20 vorgesetzt. Diese weist einen Gerätesockel 33 auf, in dem ein Drucklufterzeuger sowie Steuereinrichtungen untergebracht sind, und unter einer durchsichtigen Haube 34 eine Etikettiermaschine 35 mit Drucker. Figur 4 zeigt, dass der Gerätesockel 33 relativ zu dem Gehäuse des Lagerautomaten 12 um eine vertikale Achse schwenkbar ist, so dass die dem Lagerautomat zugewandte Arbeitsseite der Behandlungsvorrichtung 20 zu Wartungszwecken zugänglich ist. Zusätzlich ist in Figur 4 ein Fenster 38 in einer Frontscheibe 39 des Lagerautomaten sichtbar. Durch dieses Fenster 38 kann der Applikator der Behandlungsvorrichtung zugreifen, um den Gegenstand vor dessen Ausgabe aus dem Lagerautomaten zu etikettieren. An dem Gehäuse des Lagerautomaten ist ein Scharnier 36 für die Befestigung der Behandlungsvorrichtung 20 vorgesehen (Figur 3) und eine Verriegelungsvorrichtung 37 (Figur 4).

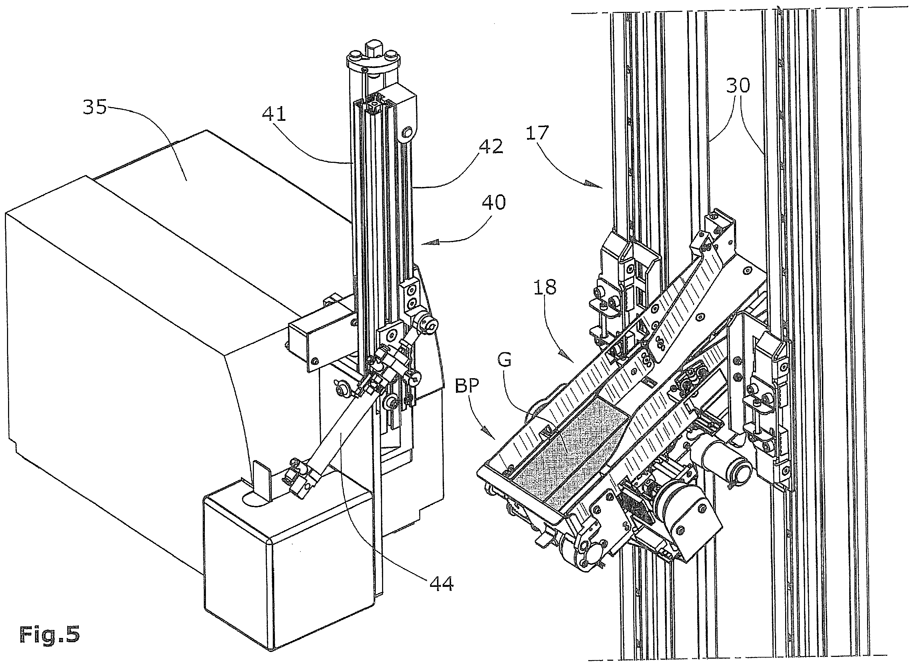

In den Figuren 5-7 ist die Arbeitsweise des Applikators dargestellt und dessen Zusammenwirken mit dem Manipulator 17. Der Warenträger 18 des Manipulators 17 kann die in den Figuren 5-7 dargestellte Behandlungsposition BP anfahren. Dies ist eine vorbestimmte Position, in der die Behandlungsvorrichtung mit dem von dem Manipulator getragenen Gegenstand G zusammenwirken kann.

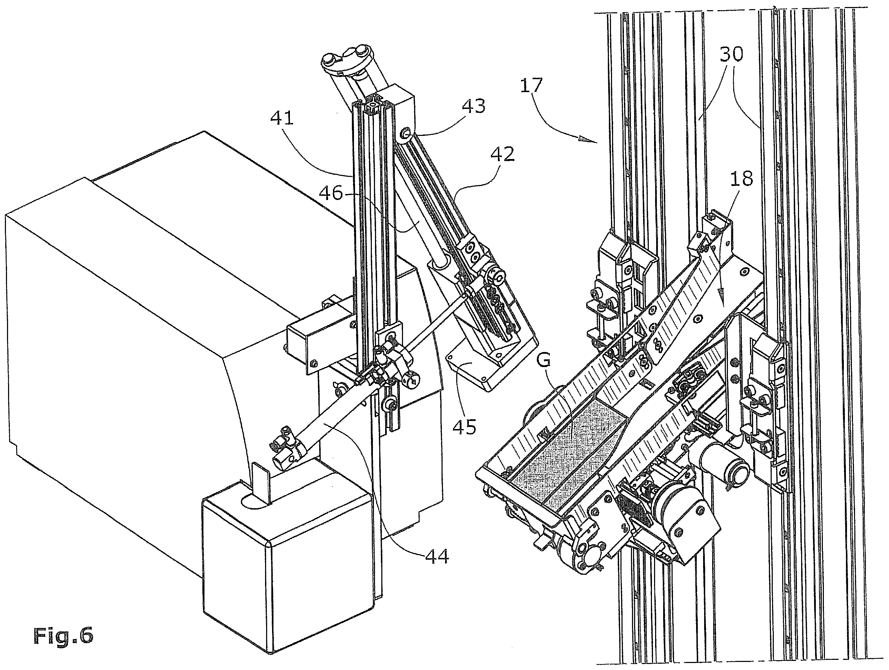

An dem Gehäuse der Etikettiermaschine 35 ist der Applikator 40 befestigt. Dieser weist einen ortsfesten starren Tragarm 41 und einen Schwenkarm 42 auf. Der Schwenkarm 42 ist mit einem Gelenk 43 am oberen Ende des Tragarms 41 befestigt. Ein Linearantrieb 44, im vorliegenden Fall ein Pneumatikzylinder, ist an dem Tragarm 41 befestigt und seine Stange greift gelenkig an dem Schwenkarm 42 an. Der Linearantrieb 44 verschwenkt den Schwenkarm 42 zwischen einer Rückzugsposition (Figur 5) und einer Arbeitsposition (Figur 6). Am unteren Ende des Schwenkarms 42 befindet sich eine Stempelplatte 45, die durch einen an dem Schwenkarm 42 vorgesehenen Linearantrieb 46 in Längsrichtung des Schwenkarms bewegbar ist. Diese Stempelplatte 45 enthält eine (nicht dargestellte) Saugvorrichtung zum Ansaugen und Festhalten eines von dem Drucker bedruckten Etiketts. In der Arbeitsposition des Schwenkarms (Figur 6) ist die Stempelplatte 45 parallel zu dem Boden des Warenträgers 18, auf dem der Gegenstand G ruht. Folglich kann das Etikett durch Betätigen des Linearantriebs 46 auf den Gegenstand G übertragen werden. Der Manipulator 17 fährt dann den Warenträger hinter ein Ausgabefenster 31 (Figur 2), wodurch der Gegenstand aus dem Lagerautomaten ausgegeben wird.

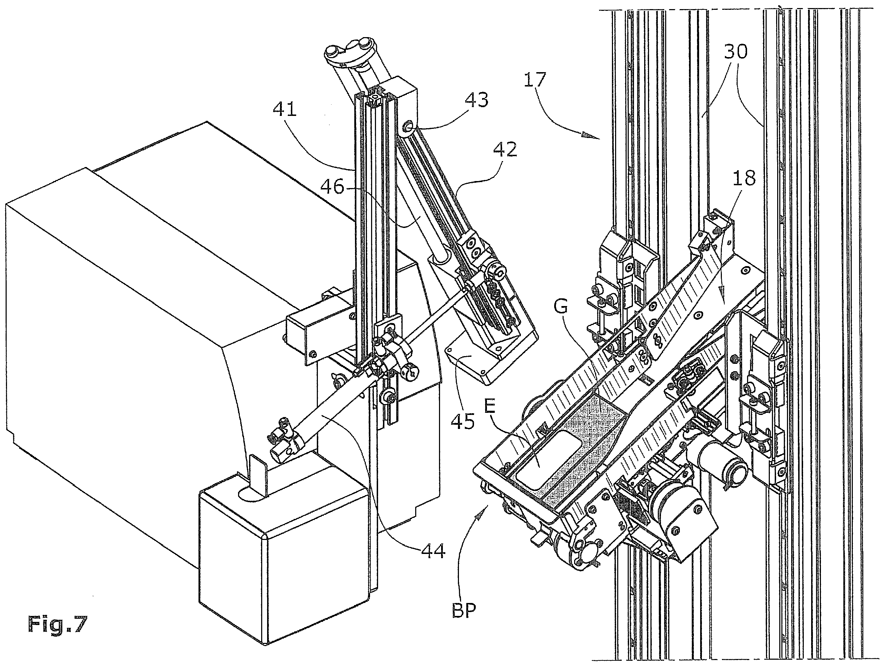

Figur 7 zeigt den in der Behandlungsposition BP befindlichen Warenträger 18 mit dem darauf liegenden Gegenstand G, auf dem das Etikett E in vorbestimmter Ausrichtung angebracht wurde. Das Etikett E ist ein selbstklebendes Etikett, das in dem Drucker bedruckt wird, während es sich auf einem Trägerstreifen befindet. Das bedruckte Etikett wird anschließend von dem Trägerstreifen abgenommen und dann von der Stempelplatte 45 übernommen.

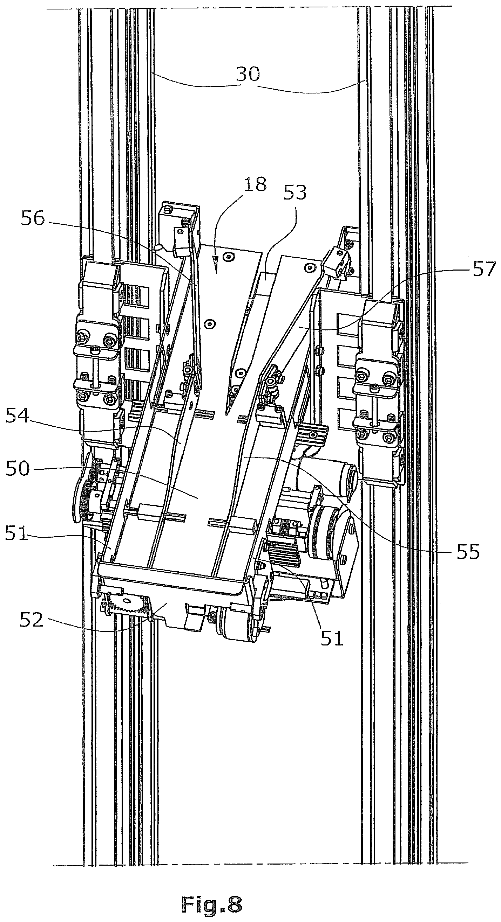

Figur 8 zeigt den Warenträger 18, der längs der vertikalen Führungsschienen 30 gesteuert verfahrbar ist. Der Warenträger 18 weist eine schräg angeordnete Bodenplatte 50 auf, die durch feste Seitenplatten 51 seitlich begrenzt ist. Am unteren (vorderen) Ende befindet sich eine gesteuert schwenkbare Klappe 52, die um eine horizontale Achse nach unten geklappt werden kann, um den Gegenstand in das Ausgabefenster 31 zu entlassen. Der Gegenstand gleitet dann aufgrund seiner Schwerkraft von dem Boden 50 herab.

An dem oberen Ende des Bodens 50 ist ein Heber 53 angeordnet, der gesteuert über die Fläche des Bodens 50 hinaus angehoben werden kann, um einen in einem Kanal 15 (Figur 2) liegenden vorderen Gegenstand anzuheben. Dann gelangt dieser Gegenstand über den Anschlag am vorderen Ende des Kanals auf den Warenträger 18.

Auf dem Boden 50 des Warenträgers sind Führungsbacken 54,55 angeordnet. Diese verlaufen parallel zueinander und sie sind gegensinnig zueinander gesteuert, wobei sich die Führungsbacken von einer gedachten feststehenden Mittellinie entweder entfernen oder sich annähern. An dem oberen Ende jeder Führungsbacke 54,55 ist eine Einlaufschräge 56,57 angelenkt, deren oberes Ende an der Seitenwand 51 geführt ist. Die Einlaufschrägen 56,57 bilden gewissermaßen einen Trichter, durch den der Gegenstand in die Mittellage gebracht wird. Die Führungsbacken 54,55 sind von einem Motor gemeinsam angetrieben. Wenn ein Gegenstand auf den Warenträger 18 übernommen wurde, werden die Führungsbacken 54,55 schrittweise oder kontinuierlich auseinanderbewegt, bis der Abstand größer ist als die Breite des Gegenstandes. Dann gleitet der Gegenstand zwischen den Führungsbacken bis zum unteren Endanschlag. Auf diese Weise wird verhindert, dass der Gegenstand sich verdreht oder seine Orientierung verändert. Die Führungsbacken 54,55 fahren dann weiter auseinander, bis eine äußere Endposition erreicht wird. In einer zweiten Phase bewegen sich die Führungsbacken wieder aufeinander zu, wobei eine Zentrierung des Gegenstandes in Bezug auf die Längsmittelachse des Warenträgers 18 erreicht wird. In dieser zentrierten Position wird der Gegenstand festgehalten, während das Etikett auf ihn übertragen wird.

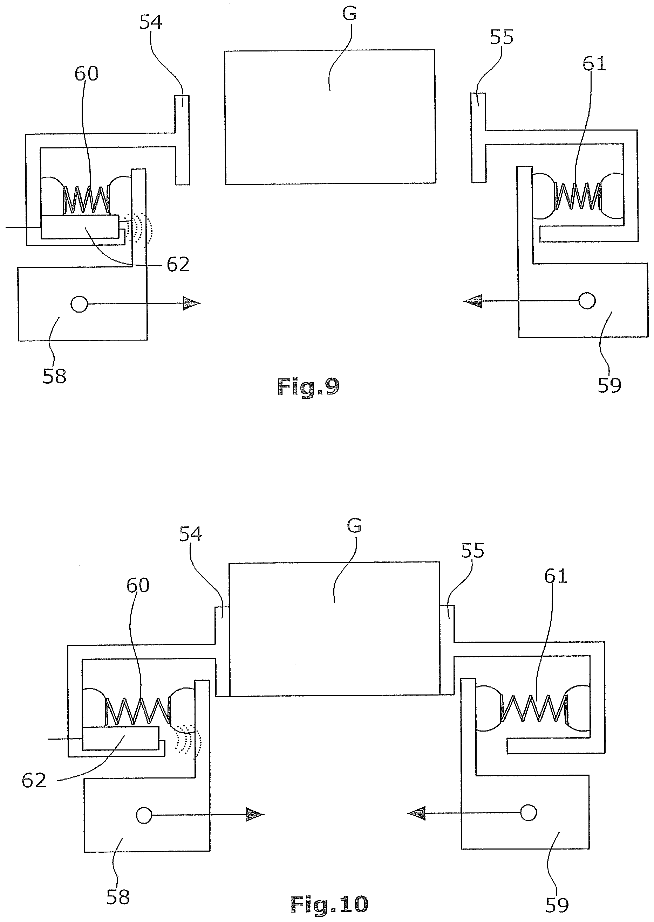

Figur 9 zeigt schematisch die zweite Phase der Bewegung der Führungsbacken 54,55. Jede Führungsbacke ist von einem Bewegungsorgan 58,59 angetrieben. Die Bewegungsorgane sind beispielsweise Spindelmuttern, die von entsprechenden Spindeln angetrieben werden. Jedes Bewegungsorgan ist mit der zugehörigen Backe durch eine Zugfeder 60,61 verbunden. Der Federweg der Zugfeder 60 wird durch einen Sensor 62 überwacht. In der zweiten Phase, die in Figur 9 dargestellt ist, bewegen sich die Bewegungsorgane 58,59 aufeinander zu, so dass sich die Führungsbacken 54,55 an die Packung G annähern. In Figur 10 ist der Zustand dargestellt, dass die Führungsbacken 54,55 an dem Gegenstand G anliegen und gegen diesen drücken. Die Bewegungsorgane 58,59 sind bestrebt, sich weiter aufeinander zu zu bewegen. Dadurch wird die Feder 60 gedehnt und der Sensor 62 spricht an. In diesem Zustand wird der Antrieb der Bewegungsorgane stillgesetzt, so dass die Führungsbacken 54,55 in der jeweiligen Position bleiben und die Packung G zwischen sich festhalten. In diesem Zustand erfolgt das Aufbringen des Etiketts.

Mit der beschriebenen Zentriervorrichtung können auch zylindrische Packungen zentriert bzw. behandelt werden. In diesem Fall besteht die Stempelplatte aus einem gepolsterten oder druckbeaufschlagten Kissen, das sich der Kontur des Gegenstandes anpasst. Mit einer derartigen Stempelplatte können Gegenstände mit ebener und mit runder Oberfläche etikettiert werden.

Die Erfindung, die hier am Beispiel eines Kanalautomaten erläutert wurde, ist auch bei Lagerautomaten vom Einzelplatz-Typ anwendbar.

## Patentansprüche

1. Automatisches Warenlager mit einer Vorrichtung, die einzulagernde Gegenstände identifiziert, und einem Lagerautomaten (12), mit einem Auslagerungsmanipulator (17), der Manipulatorfunktionen für Auslagerung, bei denen die auszulagernden Gegenstände aus dem Warenlager ausgelagert und ausgegeben werden, ausführt, und mit einer Behandlungsvorrichtung (20), die eine Etikettiermaschine oder ein Drucker ist und im Stande ist, warenbezogene Informationen an dem ausgelagerten Gegenstand anzubringen, wobei die vom Auslagerungsmanipulator (17) ausgeführte Manipulatorfunktion für Auslagerung das Festhalten des Gegenstandes (19) im Wirkbereich der Behandlungsvorrichtung (20) umfasst,
**dadurch gekennzeichnet,**
**dass** der Auslagerungsmanipulator (17) einen Warenträger (18) mit seitlich bewegbaren Führungsbacken (54,55), die parallel verlaufen und gegensinnig gesteuert sind, aufweist, welche Gegenstände unterschiedlicher Abmessungen auf dem Warenträger (18) zentrieren und in definierter Ausrichtung positionieren, wobei der Warenträger (18) eine Tragfläche mit rückwärtiger Stützfunktion ist und eine schräg angeordnete Bodenplatte (50) aufweist, die durch feste Seitenplatten (51) seitlich begrenzt ist, wobei die Führungsbacken (54,55) auf der Bodenplatte (50) angeordnet sind und am oberen Ende der Führungsbacken (54,55) jeweils eine Einlaufschräge (56,57) angelenkt ist, deren oberes Ende an der Seitenplatte (51) geführt ist, und die Führungsbacken (54,55) in einer ersten Phase des Positionierens eines Gegenstandes derart gesteuert sind, dass sie sich voneinander entfernen, und in einer zweiten Phase derart gesteuert sind, dass sie sich aufeinander zu bewegen.

2. Automatisches Warenlager nach Anspruch 1, **dadurch gekennzeichnet, dass** ein Warenannahmeautomat (10) einen Sensor zum Identifizieren eines einzulagernden Gegenstandes aufweist und dass ein Lagerverwaltungsrechner die Überführung dieses Gegenstandes vom Warenannahmeautomat (10) zum Lagerautomaten (12) und die Einlagerung des Gegenstandes steuert und eine Kennung des Gegenstandes zusammen mit dem jeweiligen Speicherplatz speichert und dass die Etikettiermaschine oder der Drucker auf den Gegenstand (19) bezogene Informationen an diesem anbringt.

3. Automatisches Warenlager nach Anspruch 1 oder 2, **dadurch gekennzeichnet, dass** die Führungsbacken (54,55) gegensinnig zueinander angetrieben sind und einen Sensor (62) enthalten, der anspricht, wenn das Zusammenbewegen der Führungsbacken eine vorbestimmte Kraft übersteigt, und die Führungsbacken in dieser Position anhält.

4. Automatisches Warenlager nach einem der Ansprüche 1 bis 3, **dadurch gekennzeichnet, dass** die Behandlungsvorrichtung (20) einen Applikator (40) mit einem eine Stempelplatte (45) tragenden Schwenkarm (42) aufweist.

5. Automatisches Warenlager nach Anspruch 4, **dadurch gekennzeichnet, dass** die Stempelplatte (45) an dem Schwenkarm (42) in dessen Längsrichtung gesteuert angetrieben ist.

6. Automatisches Warenlager nach Anspruch 4 oder 5, **dadurch gekennzeichnet, dass** die Stempelplatte (45) eine Saugvorrichtung zum Halten eines Etiketts aufweist.

7. Automatisches Warenlager nach einem der vorhergehenden Ansprüche, **dadurch gekennzeichnet, dass** die Behandlungsvorrichtung (20) vor der Vorderseite des Lagerautomaten (12) fixiert ist, und dass der Auslagerungsmanipulator (17) des Lagerautomaten eine gespeicherte Behandlungsposition anfahren kann, in der die Behandlungsvorrichtung (20) auf den auf dem Auslagerungsmanipulator (17) liegenden Gegenstand zugreifen kann.

## Claims

1. Automatic storage system for goods, comprising a device adapted to identify to-be-stored objects, and a storage automat (12) having a retrieval-from-storage manipulator (17) configured to perform manipulator functions for retrieval from storage wherein the to-be-retrieved objects are retrieved from the storage system and are discharged, and comprising a treatment device (20) which is a labelling machine or a printer and is adapted to apply goods-related information on the to-be-retrieved object, wherein the manipulator function to be performed by the retrieval-from-storage manipulator (17) for retrieval from storage includes the fixing of the object (19) in the operating area of the treatment device (20),
**characterized in**
**that** the retrieval-from-storage manipulator (17) comprises an object carrier (18) having laterally movable guide jaws (54,55) which extend parallel to each other and are controlled in opposite senses, said guide jaws being provided for centering differently sized objects on the object carrier (18) and for positioning them in defined orientation, wherein the object carrier (18) is a support surface with rearward support function and comprises an obliquely arranged bottom plate (50) being laterally delimited by fixed side plates (51), wherein the guide jaws (54,55) are arranged on the bottom plate (50), and the upper end of the guide jaws (54,55) has a respective angled infeed guide (56,57) articulated to it whose upper end is guided on the side plate (51), and wherein, in a first phase of the positioning of an object, the guide jaws (54,55) are controlled to move away from each other and, in a second phase, the guide jaws are controlled to move toward each other.

2. Automatic storage system for goods according to claim 1, **characterized in that** a goods receiving automat (10) comprises a sensor for identifying a to-be-stored object, and that a storage system management computer is operative to control the transfer of this object from the goods receiving automat (10) to the storage automat (12) and the storing of the object, and to memorize an identification of the object together with the respective storage position, and that the labeling machine or the printer is operative to apply information related to the object (19) on the object.

3. Automatic storage system for goods according to claim 1 or 2, **characterized in that** the guide jaws (54,55) are driven in opposite senses and are provided with a sensor (62) configured to respond when the movement of the guide jaws toward each other exceeds a predetermined force and to stop the guide jaws in this position.

4. Automatic storage system for goods according to any one of claims 1 to 3, **characterized in that** the treatment device (20) comprises an applicator (40) having a pivot arm (42) carrying a stamp plate (45).

5. Automatic storage system for goods according to claim 4, **characterized in that** the stamp plate (45) is driven in a controlled manner on the pivot arm (42) in the longitudinal direction of the pivot arm.

6. Automatic storage system for goods according to claim 4 or 5, **characterized in that** the stamp plate (45) comprises a suction device for holding a label.

7. Automatic storage system for goods according to any one of the preceding claims, **characterized in that** the treatment device (20) is fixed in position in front of the front side of the storage automat (12), and that the retrieval-from-storage manipulator (17) of the storage automat is adapted to be advanced to a memorized treatment position in which the treatment device (20) can access the object lying on the retrieval-from-storage manipulator (17).

## Revendications

1. Entrepôt automatisé doté d'un dispositif identifiant des objets à entreposer et d'un automate de stockage (12) doté d'un manipulateur d'extraction (17), lequel effectue des fonctions de manipulateur pour l'extraction, lors desquelles les objets à extraire sont extraits de l'entrepôt et distribués, et doté d'un dispositif de traitement (20), lequel est une machine étiqueteuse ou une imprimante et peut apposer des informations relatives au produit sur l'objet extrait, dans lequel la fonction de manipulation effectuée par le manipulateur d'extraction (17) pour l'extraction comprend le maintien de l'objet (19) dans la zone efficace du dispositif de traitement (20), **caractérisé en ce que** le manipulateur d'extraction (17) comporte un support d'objet (18) doté de mâchoires de guidage (54,55) latéralement mobiles, disposées parallèlement et commandées en sens inverse, centrant des objets de dimensions différentes sur le support d'objet (18) et les positionnant dans une orientation définie, dans lequel le support d'objet (18) est une surface de support dotée d'une fonction de soutien arrière et comporte une plaque de base (50) agencée obliquement, laquelle est délimitée latéralement par des plaques latérales (51) fixes, dans lequel les mâchoires de guidage (54,55) sont agencées sur la plaque de base (50) et un biseau d'engagement (56,57) est articulé respectivement à l'extrémité supérieure de chaque mâchoire de guidage (54,55), l'extrémité supérieure de celui-ci étant guidé sur la plaque latérale (51), et les mâchoires de guidage (54,55) sont commandées dans une première phase de positionnement d'un objet de telle sorte qu'elles s'écartent l'une de l'autre, et sont commandées dans une deuxième phase de façon à se déplacer l'une sur l'autre.

2. Entrepôt automatisé selon la revendication 1, **caractérisé en ce qu'**un automate d'accueil d'objet (10) comporte un capteur afin d'identifier un objet à entreposer et **en ce qu'**un ordinateur de gestion des stocks pilote le transfert de cet objet de l'automate d'accueil (10) à l'automate de stockage (12) l'entreposage de l'objet et enregistre un identifiant de l'objet en même temps que son emplacement de stockage respectif et **en ce que** la machine étiqueteuse ou l'imprimante appose des informations liées à celui-ci sur l'objet (19).

3. Entrepôt automatisé selon la revendication 1 ou 2, **caractérisé en ce que** les mâchoires de guidage (54,55) sont entraînées en sens inverse l'une par rapport à l'autre et contiennent un capteur (62), qui répond lorsque le mouvement combiné des mâchoires de guidage excède une force prédéterminée et arrête les mâchoires de guidage dans cette position.

4. Entrepôt automatisé selon l'une des revendications 1 à 3, **caractérisé en ce que** le dispositif de traitement (20) comporte un applicateur (40) doté d'un bras pivotant (42) portant une plaque de tampon (45).

5. Entrepôt automatisé selon la revendication 4, **caractérisé en ce que** la plaque de tampon (45) sur le bras pivotant (42) est entraînée de façon commandée dans la direction de la longueur de celui-ci.

6. Entrepôt automatisé selon la revendication 4 ou 5, **caractérisé en ce que** la plaque de tampon (45) comporte un dispositif d'aspiration pour maintenir une étiquette.

7. Entrepôt automatisé selon l'une des revendications précédentes, **caractérisé en ce que** le dispositif de traitement (20) est fixé devant la face avant de l'automate de stockage (12), et **en ce que** le manipulateur d'extraction (17) de l'automate de stockage peut démarrer une position de traitement enregistrée, où le dispositif de traitement (20) peut accéder à l'objet se trouvant sur le manipulateur d'extraction (17).
